# EUROPEAN PATENT APPLICATION

(11) **EP 3 010 247 A1**
(43) Date of publication of application: **20.04.2016**
(21) Application number: 15155513.3
(22) Date of filing: 18.02.2015
(51) Int. Cl.: H04Q 9/02

(54) **Data transmission method of the mobile telemetry device**

(30) Priority: 15.10.2014 LT 2014122
(71) Applicant: Eldes, UAB, 06313 Vilnius (LT)
(72) Inventor:
(74) Representative: Draugeliene, Virgina Adolfina

(57) **Abstract**

The invention relates to the systems and methods for data transmission from a mobile telemetric device. Proposed method comprises following steps: activating of desirable pre-set conditions in the mobile telemetric device in advance. If one of them is satisfied, the telemetric device sends an SMS message over the mobile communication network to the user's mobile terminal. The SMS message contains an encoded unique Internet address (URL) link comprising an address of a service provider's server, an identification code of the telemetric device, time of each satisfied pre-set condition and code or codes of corresponding satisfied pre-set condition or conditions. By activating the link via the Internet communication the user is taken to the service provider's server, which decodes the link and transmits the appropriate data back via the Internet communication in a preselected form to the user informing him of what pre-set conditions were satisfied.

## Description

### Technical field to which the invention relates

The present invention relates to the systems and methods for data transmission from a mobile telemetric device.

### Relevant prior Art

Data transmission method used in the Hellios Bars device, is described on the Internet in the article "Hellios Bars-transform any bike into smart bike" on 20-06-2013 and reviewed on 05-09-2014 on the website https://www.kickstarter.com/projects/kennygibbs/helios-bars-transform-any-bike-into-a-smart-bike. This method describes mobile telemetric device data transmission method where the user, in order to locate the telemetric device, sends a short message (SMS) to said telemetric device, which responds to the user's mobile terminal via an SMS message, formed as a unique Internet address (URL) link to the *Google Maps* website with the location coordinates, and upon activation of the link the data from the website is downloaded to the user's mobile terminal and the user can see the location on the map where the telemetric device was at the time.

The disadvantage of this data transmission method is its narrow functionality. Upon sending a query to the telemetric device via an SMS message the device will reply with a link to a standard *Google Maps* website, which can only specify the location of the telemetric device, but cannot convey any other information of interest to the user, and also does not save (does not accumulate) the previous locations and cannot display them later.

### Technical problem to be solved

The invention is aimed at extending the data transmission functionalities of a mobile telemetric device without increasing the use of energy and the cost of data transmission services.

### Disclosure of the invention

In order to solve the above problem according to the method for data transmission from a mobile telemetric device of the present invention, desirable pre-set conditions are activated in the telemetric device in advance, if at least one of the pre-set conditions is satisfied, the telemetric device sends an SMS message over the mobile communications network to the user's mobile terminal (3), the SMS message contains an encoded unique Internet address (URL) link comprising an address of a service provider's server, an identification code of the telemetric device, time of each satisfied pre-set condition and code or codes of corresponding satisfied pre-set condition or conditions, and upon activation of the received unique Internet address (URL) link via the Internet communication by the user, the service provider's server decodes the Internet address (URL) link and transmits the appropriate data back via the Internet communication to the user's mobile terminal in a preselected form which shows at what time and which pre-set condition or conditions were satisfied.

The pre-set conditions which can be activated in the telemetric device in advance, may be such as a change of set location coordinates of the telemetric device, variation in ambient temperature, pressure, movement of the telemetric device in absence of a certain security device in the short-range wireless communication environment, energy depletion of the power source to the critical level, etc.

The data, encoded in the activated unique Internet address (URL) links, may be accumulated in the service provider's server with an option of displaying and transmitting the associated data to the user later.

### Advantages of the invention

The proposed invention extends the functionality of the data transmission method of the mobile telemetric device as it allows to activate desirable pre-set conditions in the telemetric device after satisfaction of which the user is informed by an SMS message. The SMS message contains an encoded unique Internet address (URL) link which, after its activation by the user, is transferred to the service provider's server (rather than public server providing map display services only) via the Internet communication of the user's mobile terminal. The server provides the link decoding and the delivery of the information in the form convenient to the user via the Internet communication. The telemetric device only sends short messages (SMS) over the mobile communication network to the user's mobile terminal. This ensures low operating costs (low expenses of the telemetry device owner to the mobile service provider) and low power consumption (less than connecting to the Internet directly over the mobile communication network). Also, the mobile Internet communication requires a higher level of the mobile network signal, therefore the mobile Internet service has a smaller territorial coverage. Since the message is formed as a unique Internet address (URL) link with all the relevant information encoded in it, this method maximally simplifies the transmission of the information to the service provider's server - the user just has to activate the link. In this case, the periodically rechargeable battery from the user's mobile terminal is used for the Internet communication, data is transmitted in the preferred method by the user (e.g., using the existing Wi-Fi communication or the mobile data mode based on the user's service rate).
Information received to the service provider's server is collected and processed using specialized software. The processed data is provided to the user in a Web browser presented in the most convenient form, selected by the user, taking into account the data change, for example, representing one map of the mobile telemetric device's current location and of its movement route, made in accordance with the data from previously collected activated links. In this way, the user does not need any special software - just a Web browser.

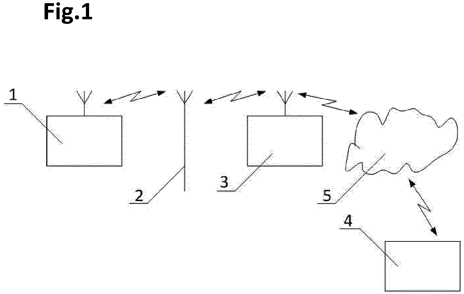

### Brief description of the drawing

Details of the invention are illustrated in the drawing, which shows the block diagram of the proposed data transmission method of a mobile telemetric device.

### Description of at least one way of carrying out the invention

Desired pre-set conditions are activated in the telemetric device 1 by the user in advance. These conditions may include, for instance, the temperature exceeding / dropping below the set threshold value, the telemetric device movement in absence of a certain security device in the short-range wireless communication environment, energy depletion of the power source to the critical level, and etc. Once at least one pre-set activated condition is satisfied (for example, when the telemetric device starts to move in absence of a certain security device) the mobile telemetric device 1 sends a short message (SMS) over the mobile communication network through the intermediate mobile communication operator stations 2 to the user's mobile terminal 3. The SMS message contains an encoded unique Internet address (URL) link to the service provider's server 4, identification code of the mobile telemetric device 3, time, and the codes of satisfied activated conditions, for instance, location coordinates, ambient temperature, pressure and other relevant pre-set information. The SMS message is formed as a unique Internet address (URL) link that, when activated, is transmitted from the user's mobile terminal 3 via the Internet communication 5 to the service provider's server 4. The software on the service provider's server 4 collects and decodes the received information and via the Internet communication 5 transmits the information back to the user's mobile terminal in the pre-selected form, for example, the telemetric device location as a point on a map with the required additional information (e.g. ambient temperature, pressure). Upon the user request, it can also present a breakdown and a statistical analysis of the activated links of the selected period, and also, if the device location coordinates have been transmitted, its time-stamped movement trajectory on the map.

## Claims

1. A method for data transmission from a mobile telemetric device (1) comprising:
- sending an information message from the telemetric device (1) over the mobile communication network to a user's mobile terminal (3) via an SMS message, formed as a unique Internet address (URL) link,
- activating of the unique Internet address (URL) link by the user in order to decode it on the specified web page, and
- displaying of the decoded information received from the telemetric device (1) to the user in a pre-selected form,
**characterised in that**
desirable pre-set conditions are activated in the telemetric device (1) in advance,
if at least one of the pre-set conditions is satisfied, the telemetric device (1) sends an SMS message over the mobile communications network to the user's mobile terminal (3),
the SMS message contains an encoded unique Internet address (URL) link comprising an address of a service provider's server (4), an identification code of the telemetric device (1), time of each satisfied pre-set condition and code or codes of corresponding satisfied pre-set condition or conditions, and
upon activation of the received unique Internet address (URL) link via the Internet communication by the user, the service provider's server (4) decodes the Internet address (URL) link and transmits the appropriate data back via the Internet communication to the user's mobile terminal (3) in a preselected form which shows at what time and which pre-set condition or conditions were satisfied.

2. A method according to claim 1, **characterised in that** the pre-set conditions which can be activated in the telemetric device (1) in advance, may be such as a change of set location coordinates of the telemetric device, variation in ambient temperature, pressure, movement of the telemetric device in absence of a certain security device in the short-range wireless communication environment, energy depletion of the power source to the critical level, etc.

3. A method according to claim 1, **characterised in that** the data, encoded in the activated unique Internet address (URL) links, may be accumulated in the service provider's server (4) with an option of displaying and transmitting the associated data to the user later.
